# EUROPEAN PATENT SPECIFICATION

(11) **EP 4 311 973 B1**
(45) Date of publication and mention of the grant of the patent: **25.12.2024**
(21) Application number: 23171188.8
(22) Date of filing: 02.05.2023
(51) Int. Cl.: F16L 59/16

(54) **METHOD FOR APPLYING A THERMAL INSULATION ON A 3-DIMENSIONAL STRUCTURE**
VERFAHREN ZUM AUFBRINGEN EINER WÄRMEDÄMMUNG AUF EINE DREIDIMENSIONALE STRUKTUR
PROCÉDÉ D'APPLICATION D'UNE ISOLATION THERMIQUE SUR UNE STRUCTURE TRIDIMENSIONNELLE

(30) Priority: 27.07.2022 NL 2032615
(43) Date of publication of application: 31.01.2024
(73) Proprietor: R. Van Den Hanenberg B.V., 5145 PC Waalwijk (NL)
(72) Inventor: HEYMANS, Antonius Gerardus Johannes Henricus, 5145 PC Waalwijk (NL)
(74) Representative: Patent Business B.V.

(56) References cited:
- EP-B1- 0 655 117
- WO-A1-2013/070074

## Description

### FIELD OF THE INVENTION

The present invention is in the field of an improved method for applying insulation material thermal insulation on a 3-dimensional structure and specifically thermal isolation of tubes, flanges, and valves, in particular by using flat insulation material and the like, as well as an 3-dimensional insulated structure obtained thereby. In particular the present invention is aimed at arrangements specially adapted to local requirements at flanges, junctions, valves or the like.

### BACKGROUND OF THE INVENTION

Insulation in air conditioning, cool installations, process installation, and heating installation has become more important over the years.

In this respect, thermal insulation relates to a reduction of heat transfer between objects in thermal contact or in range of radiation influence, such as tubing in a maintenance room. Thermal insulation can be achieved with suitable object shapes and materials. The heat transfer (flow) is considered as an inevitable consequence of contact between objects of differing temperature. In order to reduce heat flow, and thus maintaining an object substantially at a same temperature, a thermal insulation is provided. The thermal insulation has a reduced thermal conduction or likewise an insulating action. A thermal conductivity (k) is used to quantify insulating properties. Therein a low thermal conductivity value indicates a high insulating capability (R-value). Other important properties of insulating materials are product density (ρ) and specific heat capacity (c). It is noted that cooling requires much more energy than heating; so maintaining a low temperature is in view of energy consumption quite important.

Heating and cooling systems are sources of heat. They distribute heat through buildings, typically by means of pipe or ductwork. In order to reduce energy consumption insulating these pipes using pipe insulation in unoccupied rooms is required. It further prevents condensation occurring on cold and chilled pipework. Preventing the formation of condensation on pipework is important as moisture contributes to corrosion.

Likewise chemicals, water, air, electrical cables, can run through pipe work.

An example of a document relating to isolation is US 2007/0131300 which recites a pipe insulating fitting cover for insulating a pipe j oint, the cover having a first insulating cover for insulating the body of the pipe joint and a second insulating cover for enclosing and insulating the bonnet of the pipe joint. The application recites use of an abrasion apparatus. As a result thereof parts of said cover are abraded to obtain a specific shape. Such abrasion requires a rigid insulation material and a substantial chance of burr formation at the edge of abraded regions. In addition no good insulation is obtained at the edges. It is noted that a curvature of the abrasion apparatus limits the application to specific pipe diameters. Shaping an insulation cover using an abrasive would result in burr formation and an uneven sealing of both the insulation cover itself and the to-be-covered material. The covers used are curved.

For (somewhat) complex piping insulation typically flexible elastomeric foams are used. These foams relate to flexible and closed-cell structures. Examples are rubber foams based on NBR or EPDM rubber. Flexible elastomeric foams exhibit such a high resistance to the passage of water vapor that they do not generally require additional water-vapor barriers. Such high vapor resistance, combined with the high surface emissivity of rubber, allows flexible elastomeric foams to prevent surface condensation formation with comparatively small thicknesses.

As a result, flexible elastomeric foams are widely used on refrigeration and air-conditioning pipework. Flexible elastomeric foams are also used on heating and hot-water systems. However these flexible foams still have to be applied on the structures. Such includes cutting and gluing of parts. If long stretched piping is involved, such cutting and gluing is relatively simple. For complex structures, such as bends, couplings, flanges, T-junctions, and butterfly valves, craftsmanship is required. It is especially relevant that insulation pieces and parts fit well together in order to prevent condensation, mold growth, microbial growth and corrosion. For durability, fire safety, noise reduction and appearance it is important that no burrs are present. Cutting should be performed with relatively high precision and without forming burrs.

Complex structures, such as pipe-couplings, passages through walls and floors, bends, bifurcations, sensors, T-junctions, controllers, closures, vents, locking wheels, supports, suspensions, (butterfly)valves, flanges and branches, are especially difficult to insulate. In order to reduce noise and to improve fire safety similar considerations as above apply.

Thermal insulation is typically applied to a 3-D structure by using an adhesive. Despite great care, often the thermal insulation does not adhere sufficiently to the 3D-structure. Also labor conditions at the site of installation are often at least somewhat difficult, e.g. in terms of limited space, availability of tools, environmental conditions, etc. In view thereof an improved method of insulation may be referred to. WO 2016/137323 A1 recites a method of insulting complex 3-dimensional structures.

Some background art may be referred to. WO 2013/070074 A1 recites a method for filling a gap in the coating of a pipeline coated with a coating, in particular a thermo-insulating coating. The method comprises the steps of placing in the gap a mixture of solid elements and a thermoplastic polymeric material in fluid state, and letting the thermoplastic polymeric material in fluid state solidify. EP 0 655 117 B1 recites an apparatus, such as pipelines and associated equipment and to a method of making, insulating, providing buoyancy to, recovering and installing submarine apparatus. The marine or submarine apparatus comprises an impermeable enclosure associated with the apparatus, which enclosure is tightly packed with hollow microspheres to a density where, when submerged in use, the internal pressure of the microspheres is greater than or substantially equal to the water pressure on the apparatus.

It has now been found that even with improved insulation specifically complex 3-D structures are prone to oxidation. A method to prevent such is by providing a coating to said structure, such as a paint. Even though a coating is provided oxidation of underlying material may still occur, in particular when water-based coatings are used.

The present invention therefore relates to an improved method for insulating and products obtained thereby of complex 3-D structures, which overcomes one or more of the above disadvantages, without jeopardizing functionality and advantages.

### SUMMARY OF THE INVENTION

The present invention relates in a first aspect to an improved method for applying a thermal insulation on a 3-dimensional structure according to claim 1, and in a second aspect to a 3-dimensional product according to claim 18. The three dimensional structure comprises at least two individual tube sections and an outward extending connecting section.

WO 2016/137323 A1 recites a method of insulting complex 3-dimensional structures. The document and its contents are incorporated by reference. It is noted that insulation still largely relates to applying pieces of insulation material by hand. Such is especially the case for large ductworks, having external diameters ranging from 15 mm - 2 m (similar to DN15 to DN2000, such as DN20, DN50, DN80, DN100, DN200, DN250, etc.), typically being used for transport of fluids, like hot and cold water, and gases, like nitrogen and air. Modern ductwork may involve multitudes of 100-10.000 meters or more for a building or building complex. For understanding in a typical day 2000 m of ductwork may be isolated, whereas such an isolation may continue for months. The ductwork is typically formed from a metal, such as stainless steel, aluminum, or from plastics. The 3-dimensional ductwork typically comprises appendages, such as butterfly valves, pipe-couplings, passages through walls and floors, bifurcations, sensors, controllers, closures, vents, locking wheels, supports, suspensions, flanges and branches. Especially insulation of non-straight elements is subject of the present invention. These non-straight sections, after being insulated by the present flat insulation material, are left with hollow spaces in between the insulation material and said section, such as a valve. Despite the insulation it is found that especially the parts of the 3-dimensional ductwork not being in direct contact with the insulation material, but with the hollow space instead, are prone to oxidation. This is considered due amongst others to water or water vapor penetrating through the insulation.

The present method makes use of a panel of substantially flat insulation material, such as a foam plate. Preferably the material of the foam plate has an inbuilt, water vapor barrier. The plate is preferably effective in preventing moisture ingress and maintaining a long term thermal efficiency. Preferably a dust and fiber free material is used. Also the material does not rapidly deteriorate and keeps moisture as far from the pipe surface as possible, thereby reducing a risk of expensive under insulation corrosion. The material preferably has a closed cell structure, preferably interconnected closed cells. As such water ingress is limited. The material may vary somewhat in characteristics, e.g. when applied to hot or cold pipe work. In addition the present invention makes use of milled or grinded insulation material, in particular of left-over pieces of such material. In a rough estimate 10-20% of the material is left over during insulation, and the present invention is therefore considered rather cyclic in terms of re-use of material. Parts of the 3D structure to be isolated may be provided with a protecting layer, in particular the parts to be covered by particles of insulation material. Suited protecting materials are jelly-like materials, such as petroleum jelly, in particular purified jelly, or likewise a jelly with a low alkaline or acid content, such as white vaseline.

The present flat insulation material has a thickness of 0.5 cm-5 cm, such as 1.0 cm, 1.3 cm, 1.6 cm, 1.9 cm, 2.5 cm, 3.2 cm and 5.0 cm. The insulation material may have an adhesive layer. The thickness of the material is selected in view of insulation properties and temperature gradient between liquid (gas/fluid) in e.g. ductwork and outside temperature.

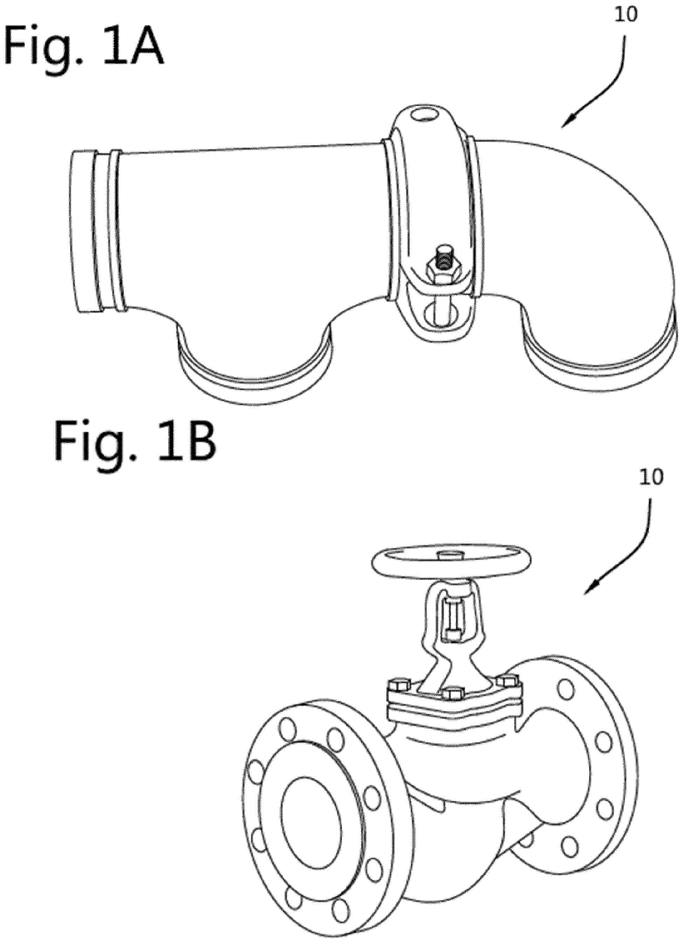

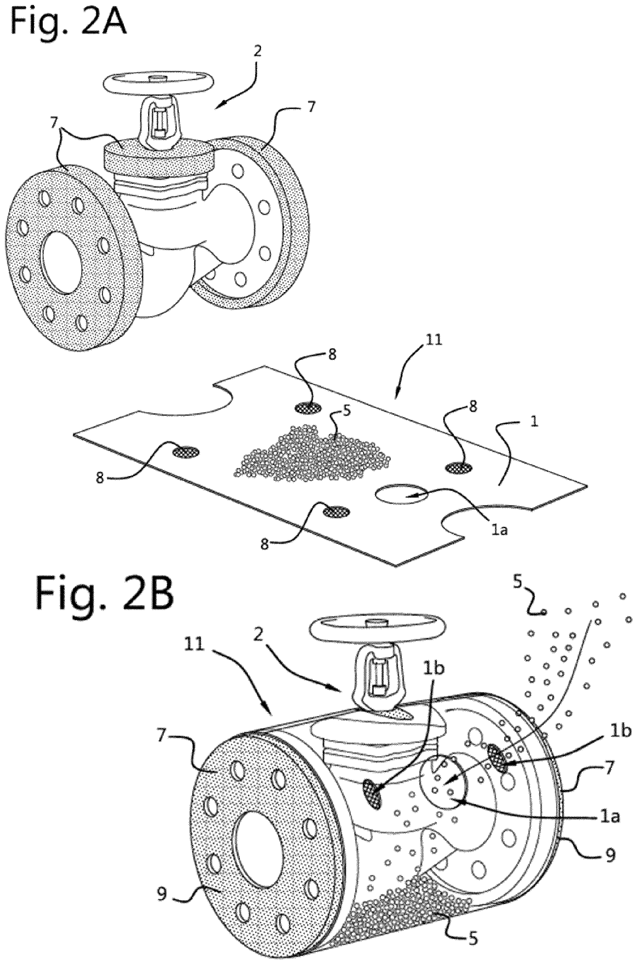

In a next step one or more 2-dimensional elements from the flat insulation material are formed, typically by hand. In the context of the present invention such an element is referred to as a two-dimensional element as the element forming substantially has a two dimensional shape or form, such as a square or rectangular form, circle section ellipsoid section, a shape according to figures 1 or 2, etc. The element clearly has the thickness of the insulation material and in that sense it is a three-dimensional element. The one or more 2-dimensional elements together are intended to form a closed structure around the pipe work, or part thereof. As such the elements need to fit perfectly with respect to one and another. It is noted that often, despite standardized measures of pipe work, most of the work is done on location, that is where the pipe work is present.

In a next step the one or more 2-dimensional elements are applied on the 3-dimensional structure. The one or more 2-dimensional elements are typically fixed by applying an adhesive.

The method of insulation is characterized e.g. in that in addition to the above flat insulation material also particles of insulation material are provided. The present method comprises providing an enclosure 1, the enclosure comprising at least one input opening 1a for providing a flow of insulation material, and at least one output opening 1b for releasing gas, in particular air, at least one input opening 1a and at least one output opening 1b being in fluidic connection with one and another, wrapping the enclosure 1 around an appendage 2 of the 3-dimensional structure, providing thermal insulation material, wherein the thermal insulation material comprises individual particles 5 with a particle size of 0.1-5 mm, in particular 0.2-1mm, providing the particles of insulation material in the enclosure, substantially filling the enclosure, and providing flat thermal insulation material 7 to the appendage including the enclosure.

In addition to the above, the present method may comprise providing a first layer of adhesive on the thermal insulation material, wherein the first layer may be applied partially on the surface of the insulation material, or fully, typically depending on the joints to be formed, as well as on the size of sub-elements of the 3D-structure, pre-drying the first layer of adhesive during a time at a pre-drying-temperature, typically at ambient conditions, such as for at least one hour, preferably for at least 4 hours, more preferably for at least 12 hours, and typically at least 36 hours, at ambient workshop temperature, and applying the thermal insulation on the 3-dimensional structure, optionally after fully or partly abrading and/or polishing the 3D-structure, preferably with sand paper or emery paper. After pre-drying the adhesive has lost most or all of its initial tackiness, and can therefore be applied without the thermal insulation material being adhered to the 3D structure. It is noted that some insulation materials may be provided already with adhesive, and a thin layer of paper or plastic or the like to protect the adhesive before being used, but these adhesive often do not adhere properly, or not fully, or let go over time. Surprisingly, by pre-drying the present adhesive, and thereafter heating the adhesive the adhesive strength is increased significantly and none of the above problems occur. In addition also slits, at joints where two sides of the insulation material come together, are absent. Such does not only improve thermal insulation, but also prevents water/moisture from entering, 3-D structure from being deteriorated, and further provides aesthetically very pleasant insulations.

Thereby the present invention provides a solution to one or more of the above mentioned problems and drawbacks, without jeopardizing beneficial effects. Advantages of the present description are detailed throughout the description.

### DETAILED DESCRIPTION OF THE INVENTION

The present invention relates in a first aspect to an improved method for applying a thermal insulation on a 3-dimensional structure according to claim 1. The 3-dimensional structure typically relates to elements of ductwork and piping, such as pipe-couplings, passages through walls and floors, bends, bifurcations, sensors, T-junctions, controllers, closures, vents, locking wheels, supports, suspensions, (butterfly)valves, flanges and branches. The outward extending connecting section may also relate to a sensor, a controller, a closure, etc.; the term indicates such extensions in general.

In an exemplary embodiment of the present method the particles are provided under pressure, in particular a pressure of 10-700 kPa, more in particular 20-100 kPa. In particular a pump or the like may be used, providing an over-pressure, or likewise, an under pressure when particles are sucked through. In view of water content, an air pressure is relatively high, in order to minimize water content; in particular the initial pressure is relatively high, such as the pressure provided by a pressure delivering device.

In an exemplary embodiment of the present method the enclosure is made of a flexible material, in particular from a polymeric material, more in particular from ABS, PP, PE, and PVC.

In an exemplary embodiment of the present method enclosure typically has a limited thickness, such as from 0.1-3 mm, in particular 1-2 mm.

In an exemplary embodiment of the present method the enclosure is substantially transparent. Therewith a user may easily observe if the space between the enclosure and the appendage is sufficiently filled with particles.

In an exemplary embodiment of the present method the at least one output opening (1b) comprises a mesh, in particular a mesh with openings smaller than 1 mm in cross-section, more in particular < 0.1 mm. As such no particles pass through, but air can pass through without much problem.

In an exemplary embodiment of the present method the particles are obtained from waste thermal insulation material, wherein the waste thermal insulation material is milled or grinded. Therewith waste material can be re-used, and spillage is reduced significantly, especial in case wherein appendages form a significant part of the 3-d structure.

In an exemplary embodiment of the present method the 3-D structure comprises a plurality of sub-elements, in particular wherein sub-elements are selected from the group of straight sections, from bends, from couplings, from T-junctions, from butterfly valves, from pipe-couplings, from passages through walls and floors, from bifurcations, from sensors, from controllers, from closures, from vents, from locking wheels, from supports, from suspensions, and from flanges and branches. Hence relatively complex structures can be insulated.

In an exemplary embodiment of the present method the flat thermal insulation material is applied by providing a first layer of adhesive on the thermal insulation material, pre-drying the first layer of adhesive during a pre-drying time, applying the thermal insulation on the enclosure and/or 3-dimensional structure, and heating the first layer of adhesive during a first period of time at a first heating-temperature.

In an exemplary embodiment the present method comprises providing a second layer of adhesive on the 3-dimensional structure, and drying the second layer of adhesive during a second period of time at a second drying-temperature. The second layer may be a one-component adhesive as well. The second layer may improve adhering. Generally the second layer is not required, and a first layer only is found to be sufficient for good adhering. However when a size or diameter of the 3-dimensiaonl structure becomes larger, such as larger than a diameter of 100 mm, it is preferred to also apply the second layer of adhesive.

In an exemplary embodiment of the present method the first period of time may be < 60 seconds, such as 2-30 seconds, such as 3-10 seconds, i.e. the adhesive heats and dries relative quickly and provides extra adherence.

In an exemplary embodiment of the present method the first heating-temperature may be < 120°C (393 K), such as 30-60°C (303-333 K). The drying temperature is preferably not too high, in view of the insulation material, and is preferably high enough to establish drying. Slightly elevated temperatures suffice.

In an exemplary embodiment of the present method the second period of time may be at least one hour, preferably for at least 4 hours, more preferably for at least 12 hours, and typically at least 36 hours.

In an exemplary embodiment of the present method the second drying-temperature may be < 120°C (393 K), such as 30-60°C (303-333 K), and typically is at ambient conditions.

In an exemplary embodiment of the present method heating may be under application of a heated air flow, such as using a blow dryer. Heating can simply be established by using a conventional blow dryer.

In an exemplary embodiment of the present method heating may be under application of induction. An advantage thereof is that the insulation material itself does not heat up. In addition no vapor, such as emitted is released from the adhesive.

In an exemplary embodiment of the present method heating may be under application of microwaves.

Heating may be applied with an apparatus providing a power of 0.2-10 kW, such as 0.4-1 kW, typically applied over a surface area of 10-100 cm². If microwave or induction is used suitable frequencies are 40 kHz-1 MHz, such as 100-300 kHz.

Typically all forms of heating do not damage the insulation material.

In an exemplary embodiment the present method may comprise drying the applied thermal insulation during a period of > 10 minutes, such as > 30 minutes, e.g. > 60 minutes. Drying of the adhesive typically consumes some time.

In an exemplary embodiment of the present method providing a first layer of adhesive and pre-drying the first layer of adhesive may be done at a first location, and wherein applying the thermal insulation on the 3-dimensional structure may be done at a second location. The present method provides the opportunity to prepare for application of an insulation material at a location different to where the insulation material is applied, such as at a workshop or workplace. At such a workshop conditions are typically much more optimal in view of preparation, such as space, ventilation, temperature, humidity, and so on. Also for forming the substantially 2D-structures equipment is typically available, and well accessible. A worker may for instance prepare a large number of insulation pieces, such as 20-50 pieces, then move to the location of application, and apply the pieces. The process-time is thereby reduced by 20-40%, whereas also the quality is improved, e.g. in terms of adhesive strength (being virtually impossible to remove the insulation material), preciseness, joints, appearance, etc..

In an exemplary embodiment of the present method the three dimensional structure may comprise at least two individual tube sections and an outward extending connecting section. The present method is therewith versatile.

In an exemplary embodiment of the present method the thermal insulation may have a thickness of 0.5 cm-5 cm.

In an exemplary embodiment of the present method the thermal insulation may comprise a substantially flat panel.

In an exemplary embodiment the present method may comprise forming one or more substantially 2-dimensional elements from the flat insulation material, wherein forming is assisted by a motor that provides reciprocating motion to a cutting element.

In an exemplary embodiment of the present method the forming may be performed at a constant angle with respect to the 2-dimensional element, wherein the angle is preferably selected from 85-95° (perpendicular), 40-50°, 25-35° and 55-65°.

In an exemplary embodiment of the present method a mold may be used to form the one or more substantially 2-dimensional elements.

In an exemplary embodiment of the present method the substantially 2-dimensional elements may comprise a first cylindrical like element having a first inner radius, at least one substantially flat element, wherein the first cylindrical like element and the at least one substantially flat element are connected at an angle of about 90°.

In an exemplary embodiment of the present method the flat insulation material may be rotated during forming.

In an exemplary embodiment of the present method the insulation material may be a foam.

In an exemplary embodiment of the present method the insulation material may have an inbuilt, water vapor barrier.

In an exemplary embodiment of the present method the insulation material may be a dust and fiber free material.

In an exemplary embodiment of the present method the insulation material may have a closed cell structure, preferably interconnected closed cells.

In an exemplary embodiment of the present method the 3-dimensional structure may comprise at least one element with a radius of > 100mm, such as > 200 mm.

In an exemplary embodiment the present method may comprise at a first location, in the 3-D structure identifying a plurality of sub-elements, such as from the group of straight sections, bends, couplings, T-junctions, butterfly valves, pipe-couplings, passages through walls and floors, bifurcations, sensors, controllers, closures, vents, locking wheels, supports, suspensions, flanges and branches, for each sub-element individually, identifying the type of sub-element, selecting at least one preformed 2-dimensional element for each identified sub-element to be insulated, and insulating at least one sub-element of the plurality of sub-elements, and optionally preparing and/or ordering the at least one preformed 2-dimensional element for each identified sub-element to be insulated, preferably at a second location.

In an exemplary embodiment of the present method the adhesive is a one- or two-component adhesive, such as an aqueous or solvent-based adhesive, such as comprising one or more of a polychloroprene dispersion, a polyurethane dispersion, a natural rubber dispersion, a styrene-butadiene-styrene copolymer dispersion, a nitrile-butadiene rubber dispersion, a polyvinyl butyral dispersion, a styrene-butadiene rubber dispersion, and combinations thereof, the dispersion comprising 30-80 wt.% solids.

In an exemplary embodiment of the present method the flat insulation material comprises at least one recess for receiving a bolt or part thereof at an inner side thereof.

The invention is further detailed by the accompanying example and figures, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

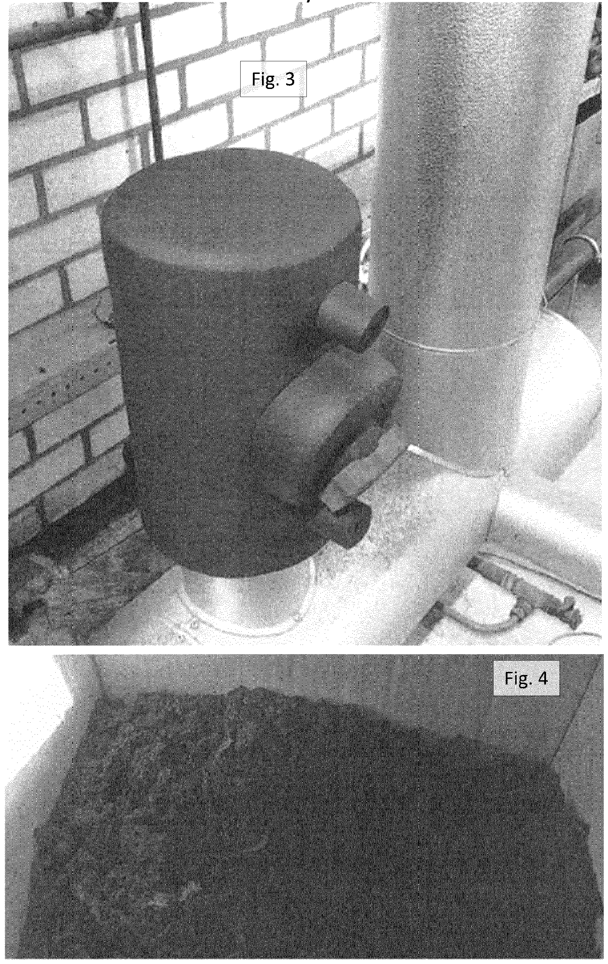

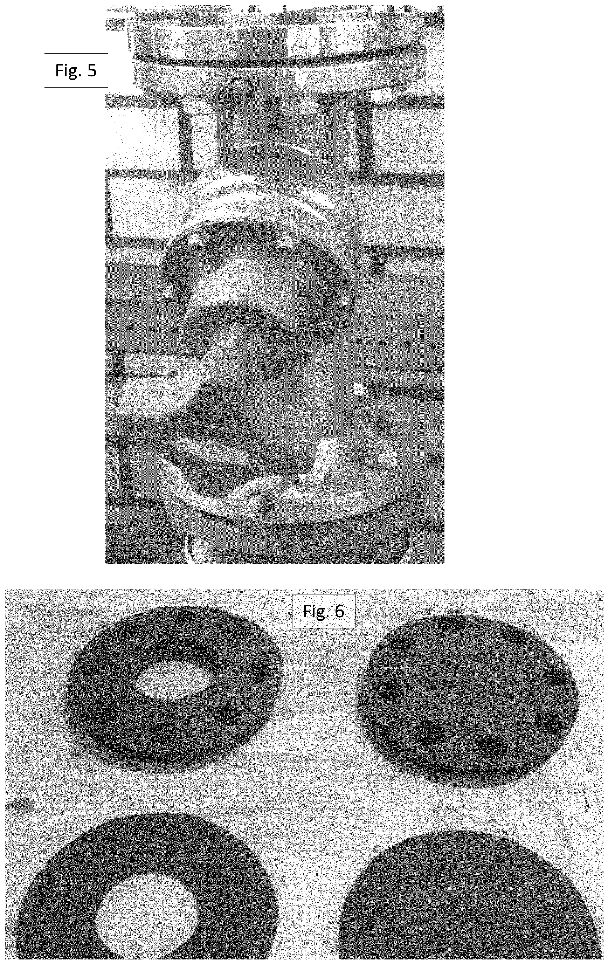

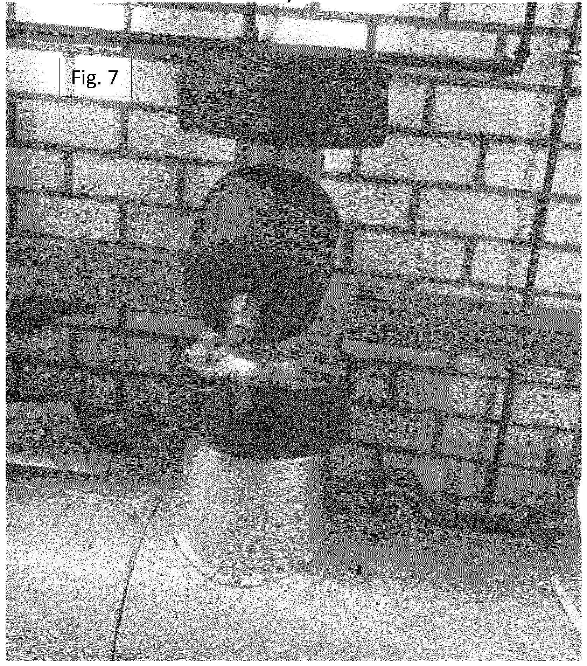

Fig. 1a-b, 2a-b, 3-14 show steps in the insulation of a complex 3D structure.

### DETAILED DESCRIPTION OF THE FIGURES

In the figures:
- 10: 3D structure
- 1: enclosure
- 1a: input opening enclosure
- 1b: output opening enclosure
- 2: appendage
- 5: insulation particles
- 7,9: flat thermal insulation material
- 8: mesh
- 11: exemplary enclosure

Figs. 1A and 1B show examples of complex structures to be insulated.

Fig. 2A shows an initial step, wherein certain sub-elements are insulated with parts 7. Subsequently in fig. 2B an enclosure 1 is shown, with schematically drawn particles 5, openings 1a and 1b, of which outlet openings 1b are provided with a mesh 8. In fig. 2B particles 5 are provided through inlet opening 1a, such as by air-pressure. Therewith the void(s) in enclosure 11 are filled with insulation material.

Fig. 3 shows a view of a fully insulated appendage. Fig. 4 shows insulation particles used therein.

Fig. 5 shows a non-insulated, but to be insulated appendage.

Fig. 6 shows initial preparations, providing some sub-elements for insulation. In the particular case these have recesses for the bolts of the appendage. Fig. 7 shows some first parts of the appendage being insulated.

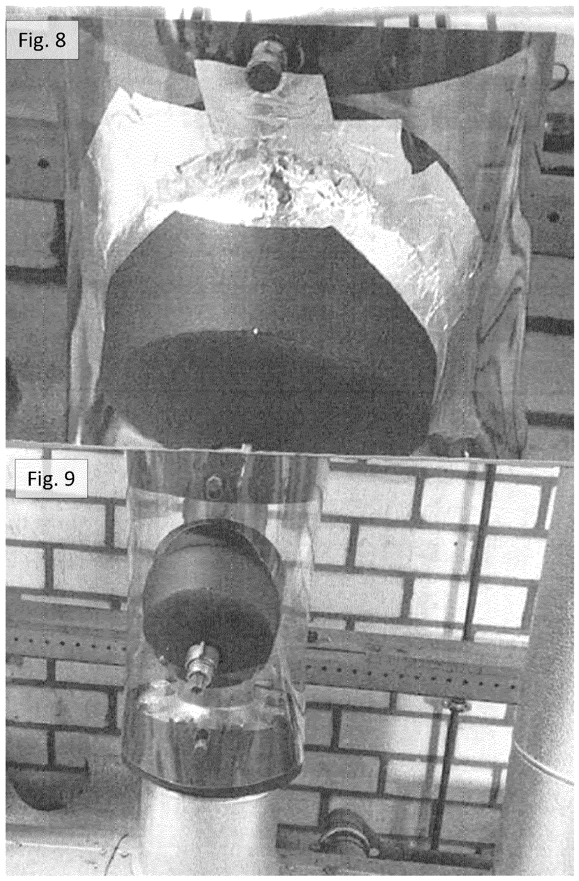

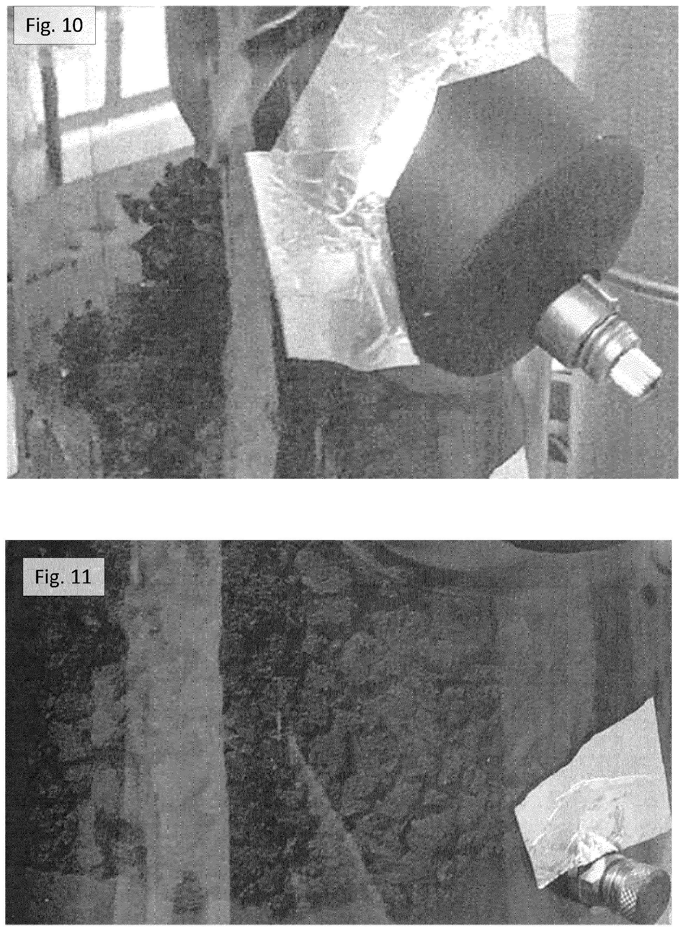

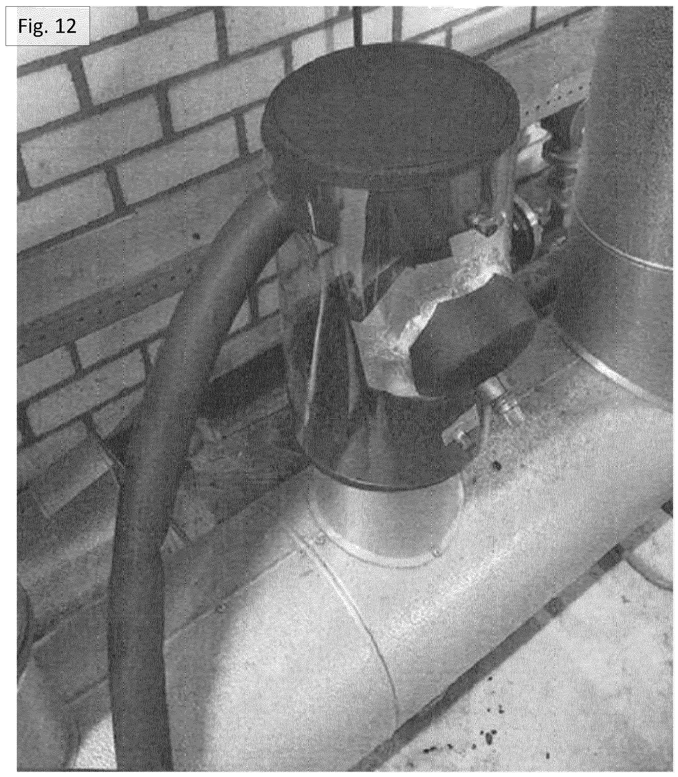

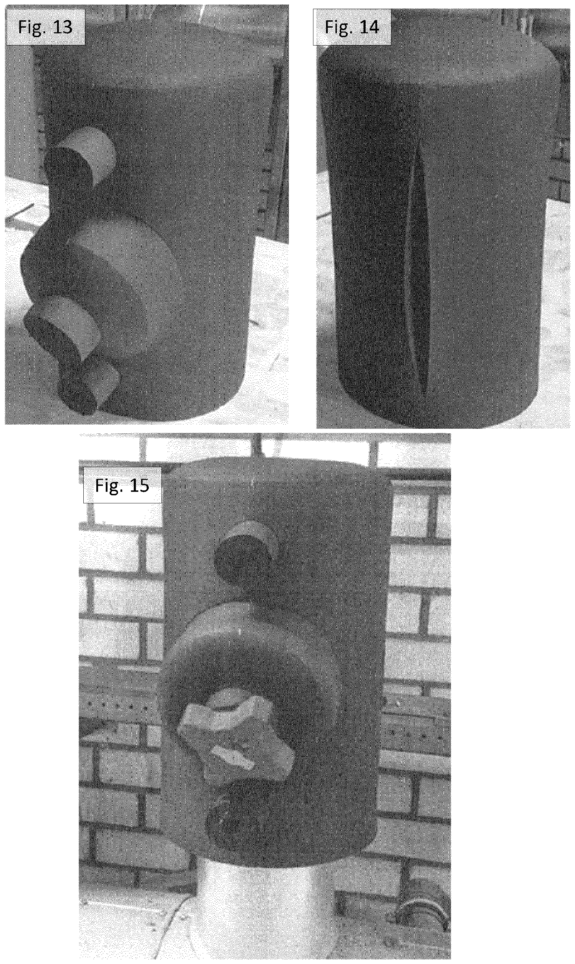

Then figs. 8-9 show application of the enclosure around the initially insulated appendage. The enclosure is made of ABS, and transparent. In order to provide a closed environment, apart from the openings in the enclosure, the enclosure is sealed to the appendage, such as by using tape. Figs. 10-11 show the partly filled enclosure, with particles, and an enlarged view of the particles used. Fig. 12 shows a stage in the filling process, wherein particles are provided through a hose, under air pressure. Figs. 113-14 show a front view of a full insulation provided thereafter, and fig. 14 a rear view. The full insulation may be prepared elsewhere. Fig. 15 then shows the insulated appendage.

### Example

In an example plates of Armaflex are used as insulation material. Preferably the insulation is made of Armaflex^{®}, such as 13 or 19 mm thick Armaflex^{®}. In the workshop, that is off-site of a location of application, typically at the home office of the applicant, the Armaflex is cut into the right dimensions, such as by using the exemplary embodiments above. As such the Armaflex are ready to be applied onto the 3D-objects to be isolated at the location thereof, in terms of structure. Then a 1K adhesive, such as Armaflex 520, is applied to one side of the insulation material. The prepared insulation material is now left to dry for at least one hour, preferably for at least 4 hours, more preferably for at least 12 hours, and typically at least 36 hours. The adhesive is then dry, and does not provide much adhesive strength anymore; this can be established easily by applying a piece of paper or the like, and removing said piece of paper; this can be done without much force. For protection of the adhesive an removable protection foil may be provided, such as a plastic foil, or paper, but typically there is not much need to do so. This process can be repeated as often is deemed required, such as 10-1000 times, such that all preparations for insulation at the location of the 3D-objects are done.

The prepared Armaflex is the transferred to the location of insulation. There the prepared Armaflex is applied to the 3D-object to be insulated. A simple heater, such as a hair dryer, is used to heat the adhesive, to a temperature of 40-60 °C, during a period of time of typically less than 60 sec, such as less than 30 sec, before applying the Armaflex. In view of the heating it is preferred to use an insulation material that can withstands temperature of up to 100 °C, preferably up to 120 °C, such as the Armaflex used. In an alternative a HU series inductive heater of RF Heating Consult is used, or likewise an inductive cooking plate of Medion can be used. The inductive heater is steadily moved over the Armaflex, typically with a slow forward and backward movement, as well as over joints and the like. The advantage is amongst others that no vapor is released from the adhesive. In both cases an extremely good adhesion is obtained; the Armaflex can not be removed with human force/human weight anymore. Also the insulation is complete and tight and good joints are obtained, without abrading.

After applying the Armaflex insulation material it is found that the adhesive strength is so high, that it is virtually impossible to remove the applied insulation, at least not by human force/body weight. In addition it is found that by preparing the insulation material at the workshop a much better quality of insulation is achieved, such as more constant, independent of the person applying the insulation material, in a shorter period of (overall) time, and with virtually no gaps/fissures, providing a fluid-tight insulation over the surface of the 3D-object and aesthetic appearance. The present method is especially suited for more complex 3D-objects and/or with a larger diameter, such as couplings.

In an example waste material from the insulation material, considered to be about 15% of the volume used, is processed into small particles of 1-2 mm size. The small particles are used to fill gaps, remaining after insulation of complex 3-D structures according to the invention.

Some or most substantially 2-D, that is flat, insulation parts or (sub-)elements for insulation are prepared. Some sub-elements may comprise receiving recesses. Some pre-adhesion of sub-elements may be performed. An enclosure, such as of ABS, is made for providing an enclosed space around the 3-D structure, to be filled with insulation particles. Some part/sub-elements may also be provided, such as head-insulation, and so on. The enclosure is typically fixed to the 3D-structure, such as with tape, and made air-tight, other than the openings remaining. In the enclosure openings are provided for input of particles and air and output of air. To that end the output typically provides a mesh. Air pressure is provided to blow the particles into the enclosure. Typically a tube-like system, such as a hose, is used to provide pressurized air and particles to the enclosure. The enclosure is then filled with particles. By using a transparent enclosure such can easily be checked visually. The particle density may be further increased, such as by vibration. After filling the input opening is closed, such as with tape. The insulation for the 3D-structre, or appendage, may be made pre-fab, that is at a different location. Therewith the material of the 3D-structure, typically comprising iron, such as stainless steel, is now fully covered on an outside thereof with insulation material, partly in the form of insulation particles, and particle in the form of applied flat insulation material. Condense formation is absent, in particular between the applied flat insulation material and the 3D-structure at locations where now the insulation particles are provided. Also no temperature loss occurs. One may consider the present method of insulation a way of fully insulating an outside of the 3d-structure, such that an integral insulation structure is provide, fully surrounding, and fully in contact and covering the 3D-structure.

## Claims

1. Method for applying a thermal insulation on a 3-dimensional structure, the 3-dimensional structure (10) configured for flowing a fluid therethrough, comprising
providing an enclosure (1), the enclosure comprising at least one input opening (1a) for providing a flow of insulation material, and at least one output opening (1b) for releasing gas, in particular air, at least one input opening (1a) and at least one output opening (1b) being in fluidic connection with one and another,
providing thermal insulation material, wherein the thermal insulation material comprises individual particles (5) with a particle size of 0.1-5 mm, in particular 0.2-1mm,
providing the particles of insulation material in the enclosure,
substantially filling the enclosure,
**characterized in**
wrapping the enclosure (1) around an appendage (2) of the 3-dimensional structure, and
providing flat thermal insulation material (7) to the appendage including the enclosure.

2. Method according to claim 1, wherein the particles are provided under pressure, in particular a pressure of 10-700 kPa, more in particular 20-100 kPa, and/or
Wherein the enclosure is made of a flexible material, in particular from a polymeric material, more in particular from ABS, PP, PE, and PVC, and/or
wherein the enclosure is substantially transparent, and/or
wherein the at least one output opening (1b) comprises a mesh (8), in particular a mesh with openings smaller than 1 mm in cross-section, more in particular < 0.1 mm.

3. Method according to any of claims 1-2, wherein the particles are obtained from waste thermal insulation material, wherein the waste thermal insulation material is milled or grinded.

4. Method according to any of claims 1-3, wherein the 3-D structure comprises a plurality of sub-elements, in particular wherein sub-elements are selected from the group of straight sections, from bends, from couplings, from T-junctions, from butterfly valves, from pipe-couplings, from passages through walls and floors, from bifurcations, from sensors, from controllers, from closures, from vents, from locking wheels, from supports, from suspensions, and from flanges and branches.

5. Method according to any of claims 1-4, wherein the flat thermal insulation material is applied by
providing a first layer of adhesive on the thermal insulation material,
pre-drying the first layer of adhesive during a pre-drying time,
applying the thermal insulation on the enclosure and/or 3-dimensional structure, and
heating the first layer of adhesive during a first period of time at a first heating-temperature.

6. Method according to any of claims 1-5, comprising providing a second layer of adhesive on the enclosure and/or 3-dimensional structure, and
drying the second layer of adhesive during a second period of time at a second drying-temperature,
in particular wherein the first period of time is < 60 seconds, such as 2-30 seconds, and/or
wherein the first heating-temperature is < 120°C (393 K), such as 30-60°C (303-333 K), and/or
wherein the second period of time is at least one hour, preferably for at least 4 hours, more preferably for at least 12 hours, and typically at least 36 hours,, and/or
wherein the second drying-temperature is < 120°C (393 K), such as 30-60°C (303-333 K), and/or
wherein heating is under application of a heated air flow, such as by using a blow dryer, and/or
wherein heating is under application of induction, and/or
wherein heating is under application of microwaves.

7. Method according to any of claims 5-6, comprising drying the applied thermal insulation during a period of > 10 minutes, such as > 30 minutes, e.g. > 60 minutes, and/or.
wherein providing the first layer of adhesive and pre-drying the first layer of adhesive is done at a first location, and wherein applying the thermal insulation on the 3-dimensional structure is done on a second location.

8. Method according to any of claims 1-7, wherein the three dimensional structure comprises at least two individual tube sections and an outward extending connecting section, and/or
wherein the thermal insulation has a thickness of 0.5 cm-5 cm, and/or
wherein the thermal insulation comprises a substantially flat panel, and/or
further comprising forming one or more substantially 2-dimensional elements from the flat insulation material, wherein forming is assisted by a motor that provides reciprocating motion to a cutting element, in particular
wherein the forming is performed at a constant angle with respect to the 2-dimensional element, wherein the angle is preferably selected from 85-95° (perpendicular), 40-50°, 25-35° and 55-65°, and/or
wherein a mold is used to form the one or more substantially 2-dimensional elements.

9. Method according to any of claims 8, wherein the substantially 2-dimensional elements comprise a first cylindrical like element having a first inner radius, at least one substantially flat element, wherein the first cylindrical like element and the at least one substantially flat element are connected at an angle of about 90°, and/or
wherein the flat insulation material is rotated during forming, and/or
wherein the insulation material is a foam, and/or
wherein the insulation material has an inbuilt, water vapor barrier, and/or
wherein the insulation material is a dust and fiber free material, and/or
wherein the insulation material has a closed cell structure, preferably interconnected closed cells.

10. Method according to any of claims 1-9, wherein the 3-dimensional structure comprises at least one element with a radius of > 100mm, such as > 200 mm.

11. Method according to any of claims 1-10, wherein the adhesive is a one- or two-component adhesive, such as an aqueous or solvent-based adhesive, such as comprising one or more of a polychloroprene dispersion, a polyurethane dispersion, a natural rubber dispersion, a styrene-butadiene-styrene copolymer dispersion, a nitrile-butadiene rubber dispersion, a polyvinyl butyral dispersion, a styrene-butadiene rubber dispersion, and combinations thereof, the dispersion comprising 30-80 wt.% solids.

12. Method according to any of claims 1-11, comprising
at a first location, in the 3-D structure identifying a plurality of sub-elements, such as from the group of straight sections, bends, couplings, T-junctions, butterfly valves, pipe-couplings, passages through walls and floors, bifurcations, sensors, controllers, closures, vents, locking wheels, supports, suspensions, flanges and branches,
for each sub-element individually, identifying the type of sub-element,
selecting at least one preformed 2-dimensional element for each identified sub-element to be insulated,
and insulating at least one sub-element of the plurality of sub-elements, and optionally
preparing and/or ordering the at least one preformed 2-dimensional element for each identified sub-element to be insulated, preferably at a second location.

13. Method according to any of claims 1-12, wherein the flat insulation material comprises at least one recess for receiving a bolt or part thereof at an inner side thereof.

14. Method according to any of claims 1-13, wherein the density of the particles in the enclosure is increased, such as by vibrating.

15. Insulated 3D-structure obtained by a method according to any of claims 1-14.

## Patentansprüche

1. Verfahren zum Aufbringen einer Wärmedämmung auf eine dreidimensionale Struktur, wobei die dreidimensionale Struktur (10) so konfiguriert ist, dass ein Fluid hindurchströmen kann, umfassend Bereitstellen einer Umhüllung (1), wobei die Umhüllung mindestens eine Eingangsöffnung (1a) zum Zuführen eines Stroms von Isoliermaterial und mindestens eine Ausgangsöffnung (1b) zum Ablassen von Gas, insbesondere Luft, aufweist, wobei mindestens eine Eingangsöffnung (1a) und mindestens eine Ausgangsöffnung (1b) in Fluidverbindung miteinander stehen,
Bereitstellen von Wärmedämmstoff, wobei der Wärmedämmstoff einzelne Partikel (5) mit einer Partikelgröße von 0,1 - 5 mm, insbesondere 0,2 - 1 mm, aufweist,
**dadurch gekennzeichnet**,
Umwickeln eines Fortsatzes (2) der dreidimensionalen Struktur mit der Umhüllung (1), Bereitstellen der Isoliermaterialpartikel in der Umhüllung,
den Raum im Wesentlichen ausfüllt und
Anbringen eines flächigen Wärmedämmmaterials (7) an dem Anhang einschließlich der Umhüllung.

2. Verfahren nach Anspruch 1, wobei die Partikel unter Druck bereitgestellt werden, insbesondere einem Druck von 10-700 kPa, insbesondere 20-100 kPa, und/oder wobei die Ummantelung aus einem flexiblen Material, insbesondere aus einem Polymermaterial, insbesondere aus ABS, PP, PE und PVC, besteht und/oder
wobei die Umhüllung im Wesentlichen transparent ist, und/oder
wobei die mindestens eine Ausgangsöffnung (1b) ein Maschennetz (8) aufweist, insbesondere ein Maschennetz mit Öffnungen kleiner 1 mm im Querschnitt, weiter insbesondere < 0,1 mm.

3. Verfahren nach einem der Ansprüche 1-2, wobei die Partikel aus Abfallwärmedämmmaterial gewonnen werden, wobei das Abfallwärmedämmmaterial gemahlen oder zermahlen wird.

4. Verfahren nach einem der Ansprüche 1-3, wobei die 3D-Struktur eine Vielzahl von Teilelementen umfasst, insbesondere wobei Teilelemente ausgewählt werden aus der Gruppe von geraden Abschnitten, von Bögen, von Kupplungen, von T-Kreuzungen, von Absperrklappen, von Rohrkupplungen, von Durchgängen durch Wände und Böden, von Gabelungen, von Sensoren, von Reglern, von Verschlüssen, von Entlüftungen, von Feststellrädern, von Stützen, von Aufhängungen und von Flanschen und Abzweigen.

5. Verfahren nach einem der Ansprüche 1 bis 4, wobei das flache Wärmedämmmaterial aufgebracht wird durch
Aufbringen einer ersten Klebstoffschicht auf das Wärmedämmmaterial,
Vortrocknen der ersten Klebstoffschicht während einer Vortrockenzeit,
Aufbringen der Wärmeisolierung auf die Umhüllung und/oder 3-D-Struktur und Erhitzen der ersten Klebstoffschicht während einer ersten Zeitspanne auf eine erste Heiztemperatur.

6. Verfahren nach einem der Ansprüche 1 bis 5, umfassend das Aufbringen einer zweiten Klebstoffschicht auf die Umhüllung und/oder die dreidimensionale Struktur und
Trocknen der zweiten Klebstoffschicht während einer zweiten Zeitspanne bei einer zweiten Trocknungstemperatur,
insbesondere wobei die erste Zeitspanne < 60 Sekunden, beispielsweise 2-30 Sekunden, beträgt, und/oder
wobei die erste Heiztemperatur < 120°C (393 K) beträgt, beispielsweise 30-60°C (303-333 K), und/oder
wobei der zweite Zeitraum mindestens eine Stunde, vorzugsweise mindestens 4 Stunden, bevorzugter mindestens 12 Stunden und typischerweise mindestens 36 Stunden beträgt, und/oder
wobei die zweite Trocknungstemperatur < 120°C (393 K) beträgt, beispielsweise 30-60°C (303-333 K), und/oder
wobei das Erhitzen unter Anwendung eines erwärmten Luftstroms, beispielsweise durch Verwendung eines Föhns, erfolgt, und/oder
wobei das Erhitzen unter Anwendung von Induktion erfolgt, und/oder
wobei das Erhitzen unter Anwendung von Mikrowellen erfolgt.

7. Verfahren nach einem der Ansprüche 5-6, umfassend das Trocknen der aufgebrachten Wärmedämmung während eines Zeitraums von > 10 Minuten, beispielsweise > 30 Minuten, beispielsweise > 60 Minuten, und/oder, wobei das Aufbringen der ersten Klebstoffschicht und das Vortrocknen der ersten Klebstoffschicht an einer ersten Stelle erfolgt, und wobei das Aufbringen der Wärmedämmung auf die 3-dimensionale Struktur an einer zweiten Stelle erfolgt.

8. Verfahren nach einem der Ansprüche 1 bis 7, wobei die dreidimensionale Struktur mindestens zwei einzelne Rohrabschnitte und einen nach außen verlaufenden Verbindungsabschnitt umfasst, und/oder
wobei die Wärmedämmung eine Dicke von 0,5 cm-5 cm aufweist, und/oder
wobei die Wärmedämmung eine im Wesentlichen flache Platte umfasst, und/oder ferner umfassend das Formen eines oder mehrerer im Wesentlichen zweidimensionaler Elemente aus dem flachen Isoliermaterial, wobei das Formen durch einen Motor unterstützt wird, der ein Schneidelement in eine Hin- und Herbewegung versetzt, insbesondere wobei das Formen in einem konstanten Winkel in Bezug auf das zweidimensionale Element durchgeführt wird, wobei der Winkel vorzugsweise aus 85-95° (senkrecht), 40-50°, 25-35° und 55-65° ausgewählt ist, und/oder
wobei eine Form verwendet wird, um die ein oder mehreren im Wesentlichen zweidimensionalen Elemente zu bilden.

9. Verfahren nach einem der Ansprüche 8, wobei die im Wesentlichen zweidimensionalen Elemente ein erstes zylinderförmiges Element mit einem ersten Innenradius und mindestens ein im Wesentlichen flaches Element umfassen, wobei das erste zylinderförmige Element und das mindestens eine im Wesentlichen flache Element in einem Winkel von etwa 90° verbunden sind, und/oder
wobei das flächige Isolationsmaterial während der Formgebung gedreht wird, und/oder
wobei das Isoliermaterial ein Schaumstoff ist, und/oder
wobei das Isoliermaterial eine eingebaute Wasserdampfsperre aufweist und/oder
wobei das Isoliermaterial ein staub- und faserfreies Material ist, und/oder
wobei das Isoliermaterial eine geschlossenzellige Struktur, vorzugsweise miteinander verbundene geschlossene Zellen, aufweist.

10. Verfahren nach einem der Ansprüche 1-9, wobei die dreidimensionale Struktur mindestens ein Element mit einem Radius von > 100 mm, beispielsweise > 200 mm, umfasst.

11. Verfahren nach einem der Ansprüche 1 bis 10, wobei der Klebstoff ein Ein- oder Zweikomponentenklebstoff ist, beispielsweise ein Klebstoff auf Wasser- oder Lösungsmittelbasis, der beispielsweise eine oder mehrere der folgenden Substanzen umfasst: eine Polychloropren-Dispersion, eine Polyurethan-Dispersion, eine Naturkautschuk-Dispersion, eine Styrol-Butadien-Styrol-Copolymer-Dispersion, eine Nitril-Butadien-Kautschuk-Dispersion, eine Polyvinylbutyral-Dispersion, eine Styrol-Butadien-Kautschuk-Dispersion und Kombinationen davon, wobei die Dispersion 30 bis 80 Gew.-% Feststoffe umfasst.

12. Verfahren nach einem der Ansprüche 1 bis 11, umfassend
an einer ersten Stelle in der 3D-Struktur eine Vielzahl von Unterelementen zu identifizieren, beispielsweise aus der Gruppe der geraden Abschnitte, Bögen, Kupplungen, T-Kreuzungen, Absperrklappen, Rohrkupplungen, Durchgänge durch Wände und Böden, Gabelungen, Sensoren, Regler, Verschlüsse, Entlüftungen, Feststellräder, Stützen, Aufhängungen, Flansche und Abzweige,
für jedes Unterelement einzeln, wobei der Typ des Unterelements angegeben wird, Auswählen von mindestens einem vorgefertigten 2-dimensionalen Element für jedes identifizierte, zu isolierende Unterelement,
und Isolieren von mindestens einem Unterelement der Vielzahl von Unterelementen und optional
Vorbereiten und/oder Bestellen des mindestens einen vorgefertigten 2-dimensionalen Elements für jedes identifizierte, zu isolierende Teilelement, vorzugsweise an einem zweiten Ort.

13. Verfahren nach einem der Ansprüche 1-12, wobei das flache Isoliermaterial an seiner Innenseite mindestens eine Aussparung zur Aufnahme einer Schraube oder eines Teils davon aufweist.

14. Verfahren nach einem der Ansprüche 1-13, wobei die Dichte der Partikel in der Umschließung erhöht wird, beispielsweise durch Vibrieren.

15. Isolierte 3D-Struktur, die durch ein Verfahren gemäß einem der Ansprüche 1-14 erhalten wird.

## Revendications

1. Procédé d'application d'une isolation thermique sur une structure tridimensionnelle, la structure tridimensionnelle (10) étant configurée pour faire circuler un fluide à travers celle-ci, comprenant fournir une enceinte (1), l'enceinte comprenant au moins une ouverture d'entrée (1a) pour fournir un flux de matériau isolant, et au moins une ouverture de sortie (1b) pour libérer du gaz, notamment de l'air, au moins une ouverture d'entrée (1a) et au moins une ouverture de sortie (1b) étant en connexion fluidique l'une avec l'autre,
fournir un matériau d'isolation thermique, le matériau d'isolation thermique comprenant des particules individuelles (5) ayant une taille de particule de 0,1 à 5 mm, en particulier de 0,2 à 1 mm, caractérisé en
enrouler l'enceinte (1) autour d'un appendice (2) de la structure tridimensionnelle,
fournir les particules de matériau isolant dans l'enceinte,
remplissant substantiellement l'enceinte, et
fournir un matériau d'isolation thermique plat (7) à l'appendice comprenant l'enceinte.

2. Procédé selon la revendication 1, dans lequel les particules sont fournies sous pression, en particulier une pression de 10 à 700 kPa, plus particulièrement de 20 à 100 kPa, et/ou Dans lequel l'enceinte est constituée d'un matériau flexible, en particulier d'un matériau polymère, plus particulièrement d'ABS, de PP, de PE et de PVC, et/ou
dans lequel l'enceinte est sensiblement transparente, et/ou
dans lequel la ou les ouvertures de sortie (1b) comprennent une maille (8), en particulier une maille avec des ouvertures de section transversale inférieures à 1 mm, plus particulièrement < 0,1 mm.

3. Procédé selon l'une quelconque des revendications 1 à 2, dans lequel les particules sont obtenues à partir de déchets de matériaux d'isolation thermique, les déchets de matériaux d'isolation thermique étant broyés ou moulus.

4. Procédé selon l'une quelconque des revendications 1 à 3, dans lequel la structure 3D comprend une pluralité de sous-éléments, en particulier dans lequel les sous-éléments sont sélectionnés dans le groupe des sections droites, des coudes, des raccords, des jonctions en T, des vannes papillon, des raccords de tuyaux, des passages à travers des murs et des planchers, des bifurcations, des capteurs, des contrôleurs, des fermetures, des évents, des roues de blocage, des supports, des suspensions, et des brides et des branches.

5. Procédé selon l'une quelconque des revendications 1 à 4, dans lequel le matériau d'isolation thermique plat est appliqué par
fournir une première couche d'adhésif sur le matériau d'isolation thermique,
pré-séchage de la première couche de colle pendant un temps de pré-séchage,
appliquer l'isolation thermique sur l'enceinte et/ou la structure tridimensionnelle, et chauffer la première couche d'adhésif pendant une première période de temps à une première température de chauffage.

6. Procédé selon l'une quelconque des revendications 1 à 5, comprenant la fourniture d'une seconde couche d'adhésif sur l'enceinte et/ou la structure tridimensionnelle, et
sécher la deuxième couche d'adhésif pendant une deuxième période de temps à une deuxième température de séchage,
en particulier dans lequel la première période de temps est < 60 secondes, par exemple 2 à 30 secondes, et/ou
dans laquelle la première température de chauffage est < 120°C (393 K), telle que 30-60°C (303-333 K), et/ou
dans laquelle la seconde période de temps est d'au moins une heure, de préférence d'au moins 4 heures, plus préférablement d'au moins 12 heures, et typiquement d'au moins 36 heures, et/ou
dans laquelle la seconde température de séchage est < 120°C (393 K), telle que 30-60°C (303-333 K), et/ou
dans lequel le chauffage est assuré par l'application d'un flux d'air chaud, par exemple en utilisant un sèche-cheveux, et/ou
dans lequel le chauffage est effectué par application d'induction, et/ou
dans lequel le chauffage est assuré par l'application de micro-ondes.

7. Procédé selon l'une quelconque des revendications 5 à 6, comprenant le séchage de l'isolation thermique appliquée pendant une période de > 10 minutes, telle que > 30 minutes, par exemple > 60 minutes, et/ou. dans lequel la fourniture de la première couche d'adhésif et le pré-séchage de la première couche d'adhésif sont effectués à un premier emplacement, et dans lequel l'application de l'isolation thermique sur la structure tridimensionnelle est effectuée à un deuxième emplacement.

8. Procédé selon l'une quelconque des revendications 1 à 7, dans lequel la structure tridimensionnelle comprend au moins deux sections de tube individuelles et une section de connexion s'étendant vers l'extérieur, et/ou
dans lequel l'isolation thermique a une épaisseur de 0,5 cm à 5 cm, et/ou
dans lequel l'isolation thermique comprend un panneau sensiblement plat, et/ou comprenant en outre la formation d'un ou plusieurs éléments sensiblement bidimensionnels à partir du matériau isolant plat, la formation étant assistée par un moteur qui fournit un mouvement alternatif à un élément de coupe, en particulier la formation étant effectuée à un angle constant par rapport à l'élément bidimensionnel, l'angle étant de préférence choisi parmi 85-95° (perpendiculaire), 40-50°, 25-35° et 55-65°, et/ou
dans lequel un moule est utilisé pour former un ou plusieurs éléments sensiblement bidimensionnels.

9. Procédé selon l'une quelconque des revendications 8, dans lequel les éléments sensiblement bidimensionnels comprennent un premier élément de type cylindrique ayant un premier rayon intérieur, au moins un élément sensiblement plat, dans lequel le premier élément de type cylindrique et le ou les éléments sensiblement plats sont reliés à un angle d'environ 90°, et/ou
dans lequel le matériau isolant plat est tourné pendant le formage, et/ou
dans lequel le matériau isolant est une mousse, et/ou
dans lequel le matériau isolant possède une barrière anti-vapeur d'eau intégrée, et/ou
dans lequel le matériau isolant est un matériau exempt de poussière et de fibres, et/ou
dans lequel le matériau isolant a une structure à cellules fermées, de préférence des cellules fermées interconnectées.

10. Procédé selon l'une quelconque des revendications 1 à 9, dans lequel la structure tridimensionnelle comprend au moins un élément avec un rayon > 100 mm, tel que > 200 mm.

11. Procédé selon l'une quelconque des revendications 1 à 10, dans lequel l'adhésif est un adhésif à un ou deux composants, tel qu'un adhésif à base aqueuse ou à base de solvant, tel qu'un adhésif comprenant un ou plusieurs éléments parmi une dispersion de polychloroprène, une dispersion de polyuréthane, une dispersion de caoutchouc naturel, une dispersion de copolymère styrène-butadiène-styrène, une dispersion de caoutchouc nitrile-butadiène, une dispersion de polyvinylbutyral, une dispersion de caoutchouc styrène-butadiène, et des combinaisons de celles-ci, la dispersion comprenant 30 à 80 % en poids de solides.

12. Procédé selon l'une quelconque des revendications 1 à 11, comprenant
à un premier emplacement, dans la structure 3D identifiant une pluralité de sous-éléments, tels que parmi le groupe des sections droites, des coudes, des raccords, des jonctions en T, des vannes papillon, des raccords de tuyaux, des passages à travers des murs et des planchers, des bifurcations, des capteurs, des contrôleurs, des fermetures, des évents, des roues de blocage, des supports, des suspensions, des brides et des branches,
pour chaque sous-élément individuellement, en identifiant le type de sous-élément,
sélectionner au moins un élément bidimensionnel préformé pour chaque sous-élément identifié à isoler,
et isolant au moins un sous-élément de la pluralité de sous-éléments, et éventuellement préparer et/ou commander au moins un élément bidimensionnel préformé pour chaque sous-élément identifié à isoler, de préférence à un deuxième emplacement.

13. Procédé selon l'une quelconque des revendications 1 à 12, dans lequel le matériau isolant plat comprend au moins un évidement destiné à recevoir un boulon ou une partie de celui-ci sur un côté intérieur de celui-ci.

14. Procédé selon l'une quelconque des revendications 1 à 13, dans lequel la densité des particules dans l'enceinte est augmentée, par exemple par vibration.

15. Structure 3D isolée obtenue par un procédé selon l'une quelconque des revendications 1 à 14.
